# EUROPÄISCHE PATENTANMELDUNG

(11) **EP 0 720 862 A1**
(43) Veröffentlichungstag der Anmeldung: **10.07.1996**
(21) Anmeldenummer: 96100106.2
(22) Anmeldetag: 05.01.1996
(51) Int. Cl.: B01D 29/15, B01D 29/66, B01D 46/24

(54) **Siebfilter für flüssige oder gasförmige Medien**

(30) Priorität: 07.01.1995 DE 29500219 U
(71) Anmelder: Bossert, Gerdi, D-78052 Villingen-Schwenningen (DE)
(72) Erfinder: Die Erfindernennung liegt noch nicht vor
(74) Vertreter: Neymeyer, Franz, Dipl.-Ing. (FH)

(57) **Zusammenfassung**

Das für flüssige oder gasförmige Medien, insbesondere für Wasserversorgungsnetze vorgesehene Siebfilter ist mit einem rohrförmigen und an seiner unteren Stirnseite geschlossenen Filtersieb (18) versehen, das in einem Behälter (2) zentral und mit vertikaler Achse angeordnet und von einem im wesentlichen hohlzylindrischen gitterartig durchbrochenen Siebträger (19) getragen ist. Das Filtersieb (18) wird vom strömenden Medium in radialer Richtung durchströmt. Der unterseitig mit einem verschließbaren Auslaß (3) versehene Behälter (2) ist oberseitig mit einem dicht aufgesetzten Kopfteil (9) versehen, der einen in eine Ringkammer (16) des Behälters (2) mündenden Zulauf (12) und einen mit dem Innenraum des Filtersiebes (18) in Verbindung stehenden Ablauf (26) aufweist. Im oberen Bereich der das Filtersieb (18) umschließenden Ringkammer (16) ist eine axiale Durchlaufsperre (30) angeordnet, die durch ein von außen bewegbares Schließorgan (33) wahlweise für eine axiale Durchströmung der Ringkammer (16) geöffnet und geschlossen werden kann. Die Durchlaufsperre (30) weist einen ortsfest an der Innenfläche (17) des Behälters (2) und am Umfang des Filtersiebes (18) anliegenden ersten Ringkörper (31) mit wenigstens einer axialen Durchlaßöffnung (32) auf, welche durch ein relativ zum Ringkörper (31) bewegliches Schließorgan verschließbar ist.

## Beschreibung

Die Erfindung betrifft ein Siebfilter für flüssige oder gasförmige Medien, insbesondere für Wasserversorgungsnetze, mit einem in einem Behälter zentral und mit vertikaler Achse angeordneten, von einem im wesentlichen hohlzylindrischen, gitterartig durchbrochenen Siebträger getragenen, rohrförmigen und an seiner unteren Stirnseite geschlossenen Filtersieb, das vom strömenden Medium in radialer Richtung durchströmt wird, wobei der unterseitig mit einem verschließbaren Auslaß versehene Behälter oberseitig mit einem dicht aufgesetzten Kopfteil versehen ist, der einen in eine Ringkammer des Behälters mündenden Zulauf und einen mit dem Innenraum des Filtersiebes in Verbindung stehenden Ablauf aufweist.

Bei bekannten Siebfiltern der gattungsgemäßen Art ist zwar am unteren Ende des Behälters gewöhnlich ein Ablaßventil oder eine Ablaßöffnung mit einem eingeschraubten Verschlußstopfen vorgesehen, damit man den Behälter zum Zwecke der Reinigung des Filtersiebes, bevor man ihn vom Kopfteil abschraubt, entleeren kann.

Zum Reinigen ist es jedoch erforderlich, das Filtersieb ebenfalls vom Kopfteil zu lösen, um die darin angesammelten Schmutzteilchen beispielsweise in einem Bad entfernen zu können. Diese Art der Handhabung ist jedoch sehr umständlich und zeitaufwendig.

Der Erfindung liegt die Aufgabe zugrunde, ein Siebfilter der eingangs genanten Art so zu gestalten, daß eine Selbstreinigung des Filtersiebes möglich ist, ohne den Behälter vom Kopfteil abnehmen zu müssen.

Gelöst wird diese Aufgabe erfindungsgemäß dadurch, daß im oberen Bereich der das Filtersieb umschließenden Ringkammer eine axiale Durchlaufsperre angeordnet ist, die durch ein von außen bewegliches Schließorgan wahlweise für eine axiale Durchströmung der Ringkammer geöffnet und geschlossen werden kann.

Mit Hilfe dieser Durchlaufsperre, die während des normalen Betriebs geöffnet ist und keinen bzw. allenfalls einen vernachlässigbar geringen Einfluß auf die Wirkung des Filtersiebes hat, ist es möglich, zum Zwecke der Reinigung des Filtersiebes, den zufließenden Strom des strömenden Mediums, z. B. Wasser oder Luft, in umgekehrter Richtung durch wenigstens den größten Teil des Filtersiebes oder durch das gesamte Filtersieb zu leiten. Dazu ist es lediglich erforderlich, die Durchlaufsperre zu schließen und den Auslaß am unteren Endabschnitt des Behälters zu öffnen. Dadurch werden die Schmutzteilchen, die sich während einer mehr oder weniger langen normalen Betriebsdauer aussenseitig am Filtersieb angesammelt haben, durch den während der Reinigungsphase von innen nach außen gerichteten Strom gelöst bzw. herausgespült und aus dem Auslaß herausgeschwemmt. Es ist klar, daß dabei je nach Verschmutzungsgrad des Siebes die Reinigungsdauer kürzer oder länger sein kann.

Während bei der einen Ausführungsform in der Reinigungsphase ein oberhalb der Durchlaufsperre angeordneter Teil des Filtersiebes in der gleichen Richtung durchströmt wird, wie beim normalen Filterbetrieb, ist es bei zwei anderen Ausführungsformen der Erfindung möglich, das gesamte Filtersieb während des Reinigungsvorganges in entgegengesetzter Richtung von dem Medium durchströmen zu lassen, so daß auch das gesamte Filtersieb gleichmäßig gereinigt werden kann.

Eine mögliche Ausgestaltung der zweiten Ausführungsform ist Gegenstand der Ansprüche 8 und 9, während die Ausgestaltungen nach den Ansprüchen 3 bis 7 eine besonders vorteilhafte Ausbildung der Durchlaufsperre zum Gegenstand haben.

Dabei ist durch die Ausgestaltung nach Anspruch 2 insbesondere sichergestellt, daß durch die Betätigung des je nach Ausführungsform axial beweglichen oder drehbaren Schließorgans der Durchlaufsperre mittels eines von außen betätigbaren Betätigungsorgans das Problem der Abdichtung relativ einfach zu lösen ist.

Durch die Ausgestaltung nach Anspruch 3 ergibt sich bei axialer Beweglichkeit des Schließorgans nicht nur eine relativ einfache Möglichkeit des Öffnens und Schließens der Durchlaufsperre, sondern es ergeben sich auch relativ einfach herstellbare Verbindungselemente zur Übertragung der Bewegungen, die für das Öffnen und Schließen der Durchlaufsperre benötigt werden.

Dabei dient die Ausgestaltung nach Anspruch 4 insbesondere der Erhöhung der Funktionssicherheit, indem durch sie sichergestellt ist, daß von dem axial beweglichen Schließorgan die Durchlaßöffnungen im Bedarfsfall mit Sicherheit vollständig geschlossen werden kann bzw. werden können. Ein vollständiges Abdichten der Durchlaufsperre ist jedoch gar nicht erforderlich für den Erfolg des Reinigungsvorgangs.

Durch den nach Anspruch 5 vorgesehenen Betätigungsstab ist bei Gewährleistung einer hohen Funktionssicherheit auch eine einfache Handhabung und gute Zugänglichkeit des Betätigungsorgans sichergestellt. Während es grundsätzlich möglich ist, die Betätigung, d.h. das Öffnen und Schließen der Durchlaufsperre mit Hilfe des Betätigungsorgans durch dessen bloße Axialverschiebung zu bewerkstelligen, hat die Ausgestaltung der Erfindung nach Anspruch 6 bzw. 7 den Vorteil, daß ein selbsttätiges Verstellen des Betätigungsorgans und somit ein ungewolltes Öffnen oder Schließen der Durchlaufsperre auf einfache Weise mit Sicherheit verhindert werden kann.

Die Ausführungsform, bei der die Durchlaufsperre in der Ringkammer so angeordnet ist, daß sich noch ein Teil des Filtersiebes oberhalb der Durchlaufsperre und somit auf der Zulaufseite befindet, hat den Vorteil, daß auch während der Reinigungsphase keine Schmutzpartikel ungehindert in den Innenraum des Filtersiebes und somit in das mit diesem Innenraum direkt verbundene Leitungssystem gelangen können.

Wenn man aber davon ausgeht, daß während der relativ kurzen Reinigungsphase, die höchstens einige Minuten in Anspruch nimmt, nur sehr wenige Schmutzpartikel in das Filtersieb gelangen können, kann diese Gefahr als vernachlässigbar gering eingestuft werden, so daß auch die beiden anderen Ausführungsformen, die Gegenstand der Ansprüche 8 bis 13 sind, ohne Nachteil verwendet werden können.

Weil bei dieser ersten Ausführungsform das Medium auch während der Reinigungsphase durch den auf der Zulaufseite der Durchlaufsperre liegenden Filtersiebabschnitt geleitet wird, könnte man vermuten, daß sich dieser Abschnitt im Laufe der Zeit völlig mit Schmutzteilchen zusetzt und keinen Durchlaß mehr zuläßt. In der Praxis hat sich jedoch erwiesen, daß durch die in der Ringkammer auch in axialer Richtung verlaufende Strömung, die während des normalen Betriebes stattfindet, von diesem Abschnitt des Filtersiebes ein Großteil der aufgefangenen Schmutzteilchen mitgenommen und endgültig an dem wesentlich größeren Filtersiebabschnitt unterhalb der Durchlaufsperre abgelagert wird. Es findet somit schon während des normalen Betriebes in dem zulaufseitigen Bereich des Filtersiebes, der oberhalb der Durchlaufsperre liegt, zumindest in begrenztem Maße, eine laufende Selbstreinigung statt.

Bei den anderen Ausführungsformen gelangt das zuströmende Medium durch geöffnete radiale Durchlaßöffnungen direkt in das Innere des Filtersiebes, ohne zuvor einen Teil des Filtersiebes selbst durchlaufen zu müssen. Der Reinigungseffekt wird dadurch effektiver. Die Reinigung kann somit in erheblich kürzerer Zeit durchgeführt werden.

Während die Ausführungsform der Ansprüche 8 und 9 etwa den gleichen Aufwand an Bauteilen erfordert, wie die erste Ausführungsform, die Gegenstand der Ansprüche 3 bis 7 ist, hat die Ausführungsform gemäß Anspruch 10 und 11 den Vorteil, mit wesentlich weniger Bauteilen auszukommen, so daß diese Ausführungsform auch mit geringeren Kosten hergestellt werden kann. Auch die Handhabung bzw. Bedienung dieser Ausführungsform ist in sofern einfacher, als man zum Umschalten vom normalen Filterbetrieb auf die Reinigungsphase nur die zu diesem Zweck mit einem geeigneten Drehknopf versehene Betätigungswelle um einen vorgegebenen Winkel verdrehen muß.

Die Ansprüche 12 bis 14 betreffen vorteilhafte Einzelheiten der beiden Ausführungsformen gemäß den Ansprüchen 8 und 9 bzw. 10 und 11.

Anhand der Zeichnung wird die Erfindung im folgenden näher erläutert. Es zeigt:
- Fig. 1: ein Siebfilter in perspektivischer Gesamtansicht;
- Fig. 2: in einem Vertikalschnitt und in vergrößertem Maßstab das Siebfilter der Fig. 1 bei geöffneter Durchlaufsperre;
- Fig. 3: das Siebfilter der Fig. 2 mit geschlossener Durchlaufsperre und geöffneter Entleerungsöffnung;
- Fig. 4: einen Schnitt IV-IV aus Fig. 2;
- Fig. 5: einen Schnitt V-V aus Fig. 2;
- Fig. 6: einen Schnitt VI-VI aus Fig. 3;
- Fig. 7: einen vertikalen Schnitt durch eine andere Ausführungsform des Siebfilters bei geöffneter Durchlaufsperre;
- Fig. 8: das Siebfilter der Fig. 7 in der gleichen Schnittdarstellung jedoch mit geschlossener Durchlaufsperre;
- Fig. 9: einen Schnitt IX-IX aus Fig. 7;
- Fig. 10: einen Schnitt X-X aus Fig. 8;
- Fig. 11: die vertikale Schnittdarstellung einer dritten Ausführungsform des Siebfilters mit geöffneter Durchlaßsperre;
- Fig. 12: in etwas vergrößerter Darstellung den oberen Teil des in Fig. 11 dargestellten Siebfilters im Schnitt mit geschlossener Durchlaufsperre;
- Fig. 13: den Betätigungsknopf der Durchlaufsperre in Draufsicht bei geöffneter Durchlaufsperre;
- Fig. 14: einen Schnitt XIV-XIV aus Fig. 11;
- Fig. 15: den Betätigungsknopf der Durchlaufsperre in Draufsicht bei geschlossener Durchlaufsperre;
- Fig. 16: im gleichen Maßstab wie Fig. 14 einen Schnitt XVI-XVI aus Fig. 12.

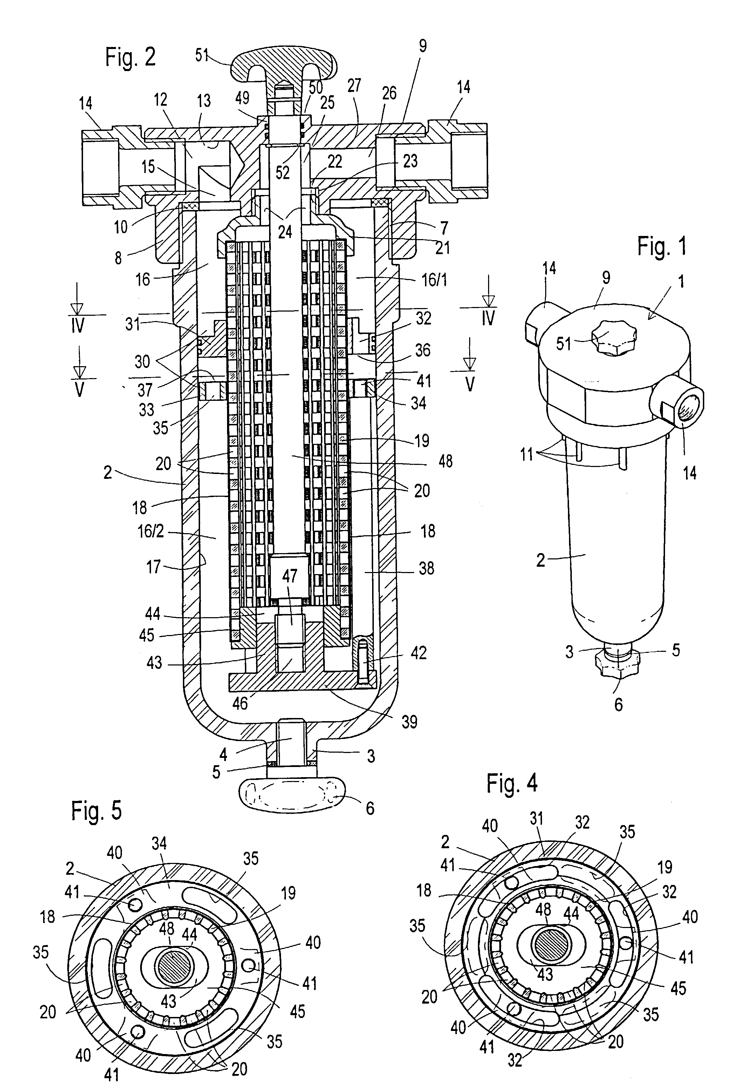

Das in Fig. 1 in Perspektivansicht als Ganzes dargestellte Siebfilter 1 weist einen topfartigen, zylindrischen oder leicht konischen Behälter 2 auf, der in der Regel aus durchsichtigem Material, z. B. aus Glas oder Acrylglas besteht. Dieser Behälter 2 ist an seinem unteren Ende mit einem Entleerungsstutzen 3 versehen, der bei Normalbetrieb mittels eines eingeschraubten Gewindezapfens 4 und einer Ringdichtung 5 dicht verschlossen ist. Der Gewindezapfen 4 ist mit einem Handgriff 6 versehen, durch den er aus dem Entleerungsstutzen 3 herausgeschraubt werden kann, um den Behälter 2 zu entleeren. Das obere Ende des Behälters 2 ist mit einem Außengewinde 7 versehen, das in einen nach unten gerichteten Gewindeansatz 8 eines im wesentlichen runden Kopfteils 9 lösbar eingeschraubt und mittels einer stirnseitig aufliegenden Ringdichtung 10 abgedichtet ist. Unmittelbar unterhalb des Außengewindes 7 sind am Außenumfang des Behälters mehrere in Umfangsrichtung verteilt angeordnete Rippen 11 vorgesehen, die das Ein- und Herausschrauben des im übrigen mit einer glatten äußeren Mantelfläche versehenen Behälters 2 erleichtern.

Der Kopfteil 9 ist mit einem Zulauf 12 in Form einer radialen Bohrung 13 versehen, in welche eine Gewindemuffe 14 eingeschraubt ist. Diese Bohrung 13 steht durch eine axiale Öffnung 15 mit einer Ringkammer 16 des in den Gewindeansatz 8 eingeschraubten Behälters 2 in direkter Verbindung. Diese Ringkammer 16 wird gebildet von der zylindrischen oder konischen Innenfläche 17 des Behälters 2 und einem zylindrischen, feinmaschigen Filtersieb 18, das einen ebenfalls zylindrischen, rohrartigen Siebträger 19 umschließt, dessen Wandung die Struktur eines Gitters mit rasterartig angeordneten Durchbrüchen 20 aufweist.

Bei einer ersten Ausführungsform des Siebfilters 1 ist der Siebträger 19 gemeinsam mit dem ihn umschließenden Filtersieb 18 mit seinem oberen Ende in einem haubenartigen Trägerring 21 befestigt, vorzugsweise eingeklebt oder eingegossen. Dieser Trägerring 21 weist einen nach oben gerichteten hohlen Gewindestutzen 22 auf, der in eine dazu passende Gewindebohrung 23 des Kopfteiles 9 eingeschraubt ist. Durch die Bohrung 24 des Gewindestutzens 22 steht der Innenraum des Trägerrings 21 und somit auch des Siebträgers 19 und des Filtersiebes 18 mit einer sich an die Gewindebohrung 23 anschließenden Axialbohrung 25 in direkter Verbindung, in welche der Ablauf 26 des Kopfteiles 9 in Form einer Radialbohrung 27 mündet. Diese Radialbohrung 27 verläuft koaxial zur radialen Bohrung 13 des Zulaufes 12, und sie ist ebenfalls mit einer Gewindemuffe 14 versehen.

Das Kopfteil 9 und der Behälter 2 sind bei allen Ausführungsformen des erfindungsgemäßen Siebfilters gleich ausgebildet und sowohl im bisher beschriebenen Aufbau als auch in der Funktionsweise beim Einsatz in häuslichen Wasserversorgungsnetzen bekannt. Solche Siebfilter werden gewöhnlich im Eingangsbereich des Wasserleitungsnetzes eines Hauses oder einer Fabrik installiert, so daß das aus dem öffentlichen Wasserleitungsnetz einströmende Wasser zunächst das Siebfilter durchläuft und von mitgeführten Schmutzteilchen befreit wird. Dabei gelangt das einströmende Wasser durch den Zulauf 12 und die axiale Öffnung 15 in die Ringkammer 16 und dort durch das Filtersieb 18 und den Innenraum des Siebträgers 19 in den Ablauf 26.

Um die Möglichkeit zu schaffen, Schmutzteilchen, die sich an der Außenseite des Filtersiebes 18 festgesetzt haben, auf einfache Weise wieder vom Filtersieb 18 zu entfernen und aus dem Entleerungsstutzen 3 herausspülen zu können, ist in der Ringkammer 16 im oberen Bereich des Filtersiebes 18 eine axiale Durchlaufsperre 30 angeordnet, die während des normalen Filterbetriebes geöffnet ist, die aber zum Zwecke der Selbstreinigung des Filtersiebes 18 geschlossen werden kann, so daß aus dem oberhalb der Durchlaufsperre 30 liegenden Ringkammerabschnitt 16/1 innerhalb dieser Ringkammer 16 kein Wasser in den darunter liegenden Ringkammerabschnitt 16/2 strömen kann.

Diese Durchlaufsperre 30 weist einen ortsfest an der Innenfläche 17 des Behälters 2 und am Umfang des Filtersiebes 18 anliegenden ersten Ringkörper 31 auf, der mit drei schlitzartig-bogenförmigen, axialen Durchlaßöffnungen 32 versehen ist. Diese Durchlaßöffnungen 32 sind in Umfangsrichtung gleichmäßig verteilt angeordnet und durch ein axial verschiebbares Schließorgan 33 gemeinsam verschließbar, das von einem zweiten Ringkörper 34 gebildet wird. Dieser zweite Ringkörper 34 ist ebenfalls mit axialen, aus gebogenen Schlitzen bestehenden Durchlaßöffnungen 35 versehen, die jedoch zu den Durchlaßöffnungen 32 des ersten Ringkörpers 31 in Umfangsrichtung so versetzt und in ihrer Länge so ausgebildet sind, daß sie sich mit diesen nicht überschneiden. Die beiden Ringkörper 31 und 34 haben jeweils einander zugekehrte planebene Stirnflächen 36 bzw. 37, die, wenn sie aneinander liegen, die Durchlaufsperre 30 schließen.

Um dies zu gewährleisten, ist es erforderlich, die beiden Ringkörper 31 und 34 so zu führen, daß sie nicht relativ zueinander verdreht werden können. Das bedeutet, daß der Ringkörper 31 drehfest befestigt sein muß.

Um den zweiten Ringkörper 34 in axialer Richtung verschieben zu können, ist er durch drei im unteren Abschnitt 16/2 der Ringkammer 16 angeordnete Verbindungsstäbe 38 mit einem am unteren Ende des Siebträgers 19 angeordneten Verschlußteil 39 verbunden. Dieses Verschlußteil 39 weist drei nach außen in die Ringkammer 16 ragende Radialfinger 40 auf, an welchen die Verbindungsstäbe 38 mittels Schrauben 42 befestigt sind. Mit dem zweiten Ringkörper 34 sind die Verbindungsstäbe 38 durch Gewindezapfen 41 verbunden, die in entsprechende Gewindebohrungen eingeschraubt sind.

Das Verschlußteil 39 ist mit einem unrunden nabenartigen Ansatz 43 versehen, der axial beweglich, jedoch undrehbar in einer entsprechenden Ausnehmung 44 eines im unteren Ende des Siebträgers 19 befestigten Hülsenteiles 45 geführt und mit einer zentralen Gewindebohrung 46 versehen ist. Diese Gewindebohrung 46 steht im Eingriff mit einem Gewindezapfen 47, der das untere Ende eines Betätigungsstabes 48 bildet. Dieser Betätigungsstab 48 durchragt sowohl den gesamten Siebträger 19 als auch den Kopfteil 9, und er ist in einer Axialbohrung 49 des Kopfteiles 9 drehbar gelagert. Durch einen auf der oberen Stirnfläche 50 des Kopfteiles 9 aufsitzenden Drehknopf 51 und eine Sicherungsscheibe 52 ist der Betätigungsstab 48 gegen axiale Verschiebung gesichert.

Durch Drehung des Betätigungsstabes 48 in der einen oder anderen Richtung kann der als Schließorgan 33 fungierende zweite Ringkörper 34 relativ zum feststehenden Ringkörper 31 in axialer Richtung in der Ringkammer 16 bewegt werden, so daß er in der einen Endstellung, die in Fig. 2 dargestellt ist, die Durchlaufsperre 30 offen hält und in der anderen, in Fig. 3 dargestellten Position, die Durchlaufsperre 30 schließt. Im geöffneten Zustand der Durchlaufsperre 30 wird das Filtersieb 18 außer in den von den beiden Ringkörpern 31 und 34 umschlossenen Bereichen in der üblichen Weise von außen nach innen durchströmt. Im geschlossenen Zustand der Durchlaufsperre 30 hingegen kann das einströmende Medium aus dem oberen Abschnitt 16/1 der Ringkammer 16 nicht direkt in den unteren Abschnitt 16/2 der Ringkammer 16 gelangen. Wenn nun zum Zwecke der Reinigung des Filtersiebes 18 der Gewindezapfen 4 aus dem Entleerungsstutzen 3 entfernt wird, strömt das Medium bei geschlossener Durchlaufsperre 30 so lange aus dem Ablauf 26 nichts herausströmen kann durch den oberhalb der Durchlaufsperre 30 liegenden Siebabschnitt in den Innenraum des Siebträgers 19 und unterhalb der Durchlaufsperre 30 wieder in radial entgegengesetzter Richtung von innen nach außen durch das Filtersieb 18 in den unteren Abschnitt 16/2 der Ringkammer 16 und von dort durch den Entleerungsstutzen 3 nach außen. Durch diese Richtungsumkehr der Strömung wird der während des normalen Filterbetriebes an der Außenseite des Filtersiebes 18 angesammelte Schmutz von diesem gelöst, d.h. herausgespült und aus dem Entleerungsstutzen 3 herausgeschwemmmt.

Um den Spül- und Reinigungsvorgang des Filtersiebes 18 zu beenden, wird der Gewindezapfen 4 mit seinem Dichtungsring 5 wieder in die Gewindebohrung des Entleerungsstutzens 3 eingeschraubt und die Durchlaufsperre 30 wieder geöffnet, in dem durch entsprechendes Drehen des Betätigungsstabes 48 der zweite Ringkörper 34 wieder nach unten in die in Fig. 2 dargestellte Position verschoben wird.

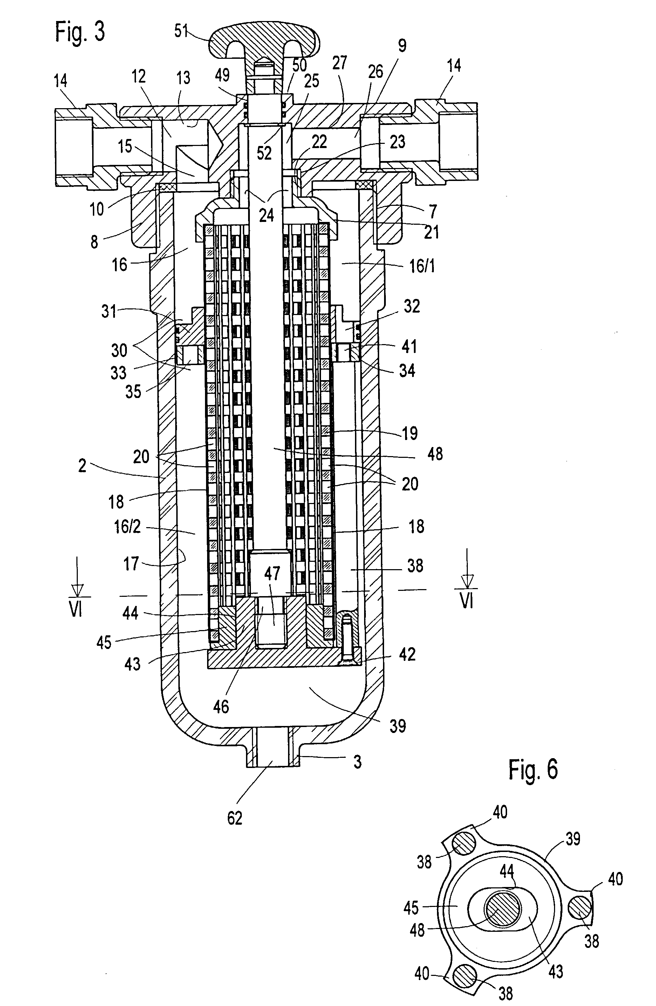

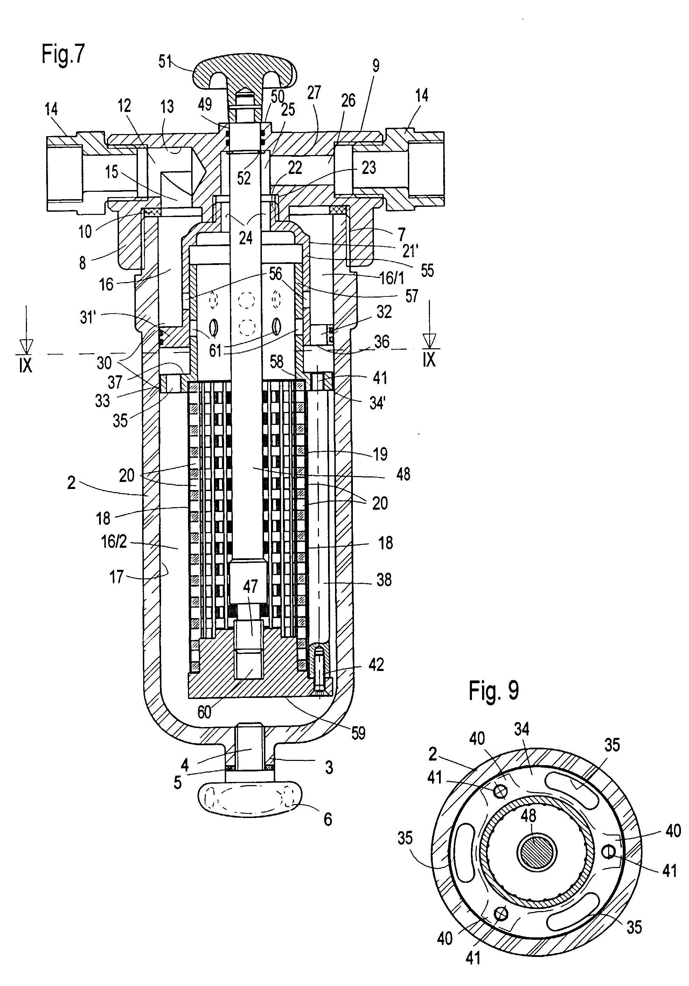

In den Fig. 7 bis 10 ist eine zweite Ausführungsform des erfindungsgemäßen Siebfilters 1 dargestellt. Dabei ist der erste Ringkörper 31' der Durchlaufsperre 30 an einer Ringwand 55 befestigt, die einstückig mit dem Trägerring 21' verbunden ist, welcher wie beim Ausführungsbeispiel der Fig. 2 bis 6 mit seinem Gewindestutzen 22 in die Gewindebohrung 23 des Kopfteiles 9 festsitzend eingeschraubt ist. Dadurch ist auch die ortsfeste und verdrehsichere Positionierung des Ringkörpers 31' gewährleistet. Dieser Ringkörper 31' hat im übrigen die gleiche Form und Funktion wie der Ringkörper 31 des Ausführungsbeispieles der Fig. 2 bis 6. Die Ringwand 55 ist mit mehreren in Umfangsrichtung gleichmäßig verteilt angeordneten radialen Durchlaßöffnungen 56 versehen, die durch eine innere, in der zylindrischen Ringwand 55 axial verstellbar geführte zweite Ringwand 57 bei geöffneter Durchlaufsperre 30 gemäß Fig. 7 verschlossen sind. Diese zweite Ringwand 57 ist einstückiger Bestandteil des zweiten Ringkörpers 34', der auch in diesem Falle das Schließorgan 33 der Durchlaufsperre 30 bildet und der die gleichen axialen Durchlaßöffnungen 35 aufweist wie der Ringkörper 34.

Bei dieser Ausführungsform dient der zweite Ringkörper 34' zugleich als Halterung für das obere Ende des Siebträgers 19 bzw. des Filtersiebes 18. Er ist zu diesem Zweck mit einer Ringnut 58 versehen, in welcher der Siebträger 19 mit seinem oberen Ende zusammen mit dem oberen Ende des Filtersiebes 18 befestigt, z. B. eingeklebt oder eingegossen ist.

Da bei dieser Ausführungsform der Siebträger 19 die Bewegungen des zweiten Ringkörpers 34' mitmacht, ist das untere Ende des Siebträgers 19 mit einem einstückigen Verschlußteil 59 verschlossen, das eine zentrale, nicht durchgehende Gewindebohrung 60 aufweist, in welche der auch hier vorhandene Gewindezapfen 47 des Betätigungsstabes 48 eingeschraubt ist. Der Betätigungsstab 48 ist in gleicher Weise im Kopfteil 9 gelagert wie beim Ausführungsbeispiel der Fig. 2 bis 6 und auch mit einem Drehknopf 51 versehen. Durch Drehen des Betätigungsstabes 48 in der einen oder anderen Richtung, wird der Gewindezapfen 47 in der Gewindebohrung 60 bewegt, so daß sich eine axiale Verstellung des Verschlußteiles 59 und des mit diesem Verschlußteil 59 durch die Verbindungsstäbe 38 verbundenen zweiten Ringkörpers 34 ergibt, der auch bei dieser Ausführungsform das Schließorgan 33 der Durchlaufsperre 30 bildet. Zwischen dem Ringkörper 31' und dem Ringkörper 34' bzw. dem Verschlußteil 59 muß auch hier eine Verdrehsicherung bestehen, damit sich der Ringkörper 34 mit seiner Ringwand 57 nicht relativ zum Ringkörper 31 und dessen Ringwand 55 verdrehen kann.

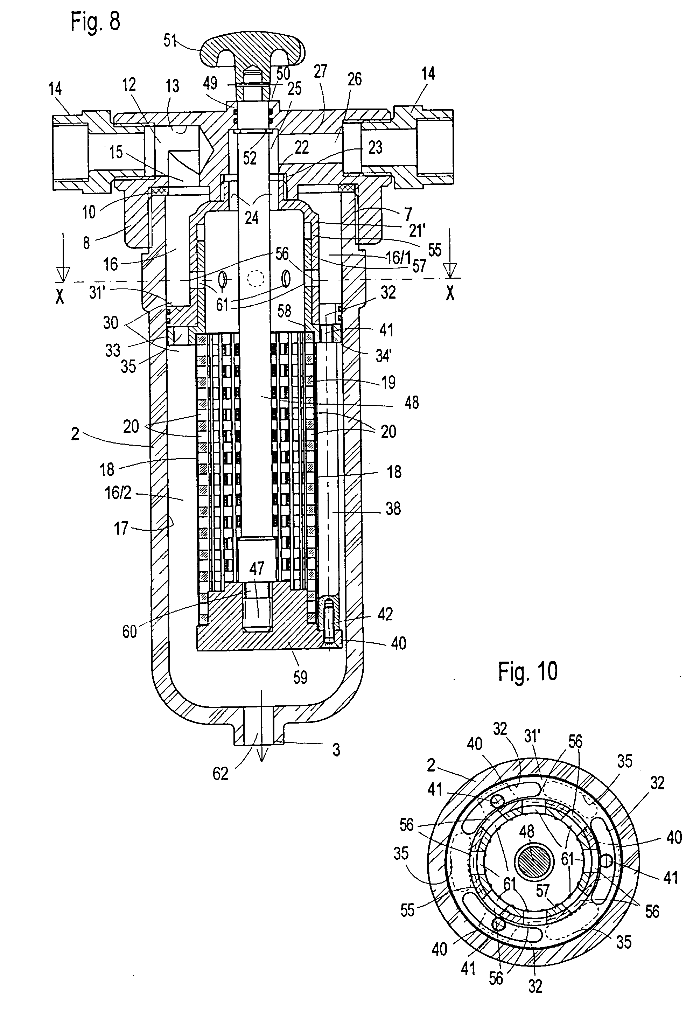

Auch die innere Ringwand 57 ist mit mehreren radialen Durchlaßöffnungen 61 versehen, die in gleichen Winkelabständen angeordnet sind wie die Durchlaßöffnungen 56 der äußeren Ringwand 55. Im übrigen sind diese radialen Durchlaßöffnungen 61 der inneren Ringwand 57 so angeordnet, daß sie bei geschlossener Durchlaufsperre 30 sich in deckungsgleicher Winkellage befinden mit den radialen Durchlaßöffnungen 56 der äußeren Ringwand 55, wie das in Fig. 8 und 10 dargestellt ist. Es ist zweckmäßig, die radialen Durchlaßöffnungen 56 und 61 der beiden Ringwände 55 und 57 als Langlöcher auszubilden, die sich in Umfangsrichtung erstrecken.

In dieser Schließlage der Durchlaufsperre 30 strömt das vom Zulauf 12 kommende Medium durch die Durchlaßöffnungen 56 und 61 der beiden Ringwände 55 und 57 in den Innenraum des Siebträgers 19 und aus diesem in radialer Richtung von innen nach außen durch das Filtersieb 18 in den unterhalb der Durchlaufsperre 30 liegenden Abschnitt 16' der Ringkammer 16 und von dort durch die geöffnete Entleerungsöffnung 62 des Entleerungsstutzens 3. Bei der in Fig. 7 dargestellten geöffneten Durchlaufsperre 30 strömt das Medium durch die axialen Durchlaßöffnungen 32 und 35 der beiden Ringkörper 31' und 34' in den unteren Abschnitt 16/2 der Ringkammer 16 und von dort radial nach innen in den Innenraum des Siebträgers 19, von wo es schließlich wieder in den Ablauf 26 gelangt.

Es ist noch nachzutragen, daß auch das Verschlußteil 59 in gleicher Weise wie das Verschlußteil 39 mit Radialfingern 40 versehen ist, an denen die unteren Enden der Verbindungsstäbe 38 durch die Schrauben 42 befestigt sind. Auch hier sind die Verbindungsstäbe 38 an ihren oberen Enden durch Gewindezapfen 41 mit dem zweiten Ringkörper 34' verbunden.

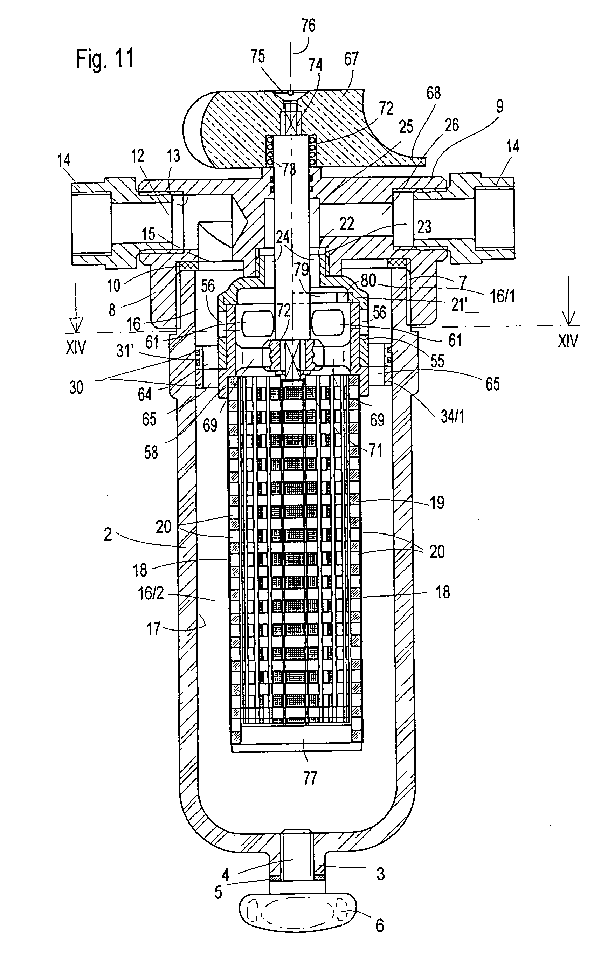

Während bei den bisher beschriebenen Ausführungsbeispielen des erfindungsgemäßen Siebfilters 1 sich das Öffnen und Schließen der sich in der Ringkammer 16 befindenden Durchlaufsperre 30 durch axiales Verschieben des zweiten Ringkörpers 34 bzw. 34' bewerkstelligen läßt, ist in den Fig. 11 bis 16 ein weiteres Ausführungsbeispiel dargestellt, bei dem sich das Öffnen und Schließen der in analoger Weise vorhandenen Durchlaufsperre 30 durch eine Drehbewegung des zweiten Ringkörpers 34/1 vollziehen läßt. Auch bei diesem Ausführungsbeispiel ist der erste Ringkörper 31' in gleicher Weise wie der Ringkörper 31' des Ausführungsbeispieles der Fig. 7 bis 10 durch eine zylindrische Ringwand 55 mit dem Trägerring 21' verbunden. Diese Ringwand 55 weist ebenfalls radiale Durchlaßöffnungen 56 auf, die durch eine innere zweite Ringwand 57 verschlossen werden können. Auch diese innere Ringwand 57 ist mit radialen Durchlaßöffnungen 61 versehen, die durch Verdrehen gegenüber der äußeren Ringwand 55 mit deren radialen Durchlaßbohrungen 56 in Deckung gebracht werden können, so daß sie insgesamt einen Durchlaß bilden. Auch in diesem Falle ist der Siebträger 19 mit dem Filtersieb 18 unmittelbar am zweiten Ringkörper 34/1 befestigt der zu diesem Zweck auch mit einer Ringnut 58 versehen ist. Das untere Ende des Siebträgers 19 ist hierbei durch ein scheibenartiges Verschlußteil 77 verschlossen. Auch die beiden Ringkörper 31' und 34/1 sind jeweils mit axialen, schlitzförmigen Durchlaßöffnungen 64 und 65 versehen, die durch die eben erwähnte Drehung des zweiten Ringkörpers 34/1 relativ zum ersten Ringkörper 31' wahlweise verschlossen oder in Deckung zueinander gebracht werden können. Dabei ist die Anordnung der radialen Durchlaßöffnungen 56 und 61 der beiden Ringwände 55 und 57 relativ zu den axialen Durchlaßöffnungen 64 und 65 der beiden Ringkörper 31' und 34/1 so getroffen, daß in der Drehlage des zweiten Ringkörpers 34/1, in welcher sich seine Durchlaßöffnungen 65 in deckungsgleicher Lage befinden mit den Durchlaßöffnungen 64 des ersten Ringkörpers 31', die radialen Durchlaßöffnungen 56 der äußeren Ringwand 55 geschlossen sind und daß umgekehrt die Durchlaufsperre 30 geschlossen ist, wenn sich die Durchlaßöffnungen 56 und 61 der beiden Ringwände 55 und 57 in deckungsgleicher Lage befinden.

Um den zweiten Ringkörper 34/1 mit seiner Ringwand 57 von außen verdrehen zu können, ist eine relativ kurze zu der gemeinsamen Achse 76 der Ringwände 55, 57 und des Siebträgers 19 koaxiale Betätigungswelle 66 mit einem eine Zeigerspitze 68 aufweisenden Drehknopf 67 vorgesehen. Diese Betätigungswelle 66 ist durch mehrere Radialstege 69, zwischen welchen axiale Durchlässe 70 vorhanden sind, drehfest mit der Betätigungswelle 66 verbunden. Dazu ist die Betätigungswelle 66 an ihrem unteren Ende mit einem unrunden Zapfen 71 versehen, auf dem eine Nabe 72 der Radialstege 69 drehsicher und axial unbeweglich gelagert ist. Um die beiden Ringkörper 31' und 34/1 dauernd in axialer Anlage zu halten, ist am oberen Ende der Betätigungswelle 66 in einer zylindrischen Ausnehmung 72 des Drehknopfes 67 eine Druckfeder 73 angeordnet, welche den Drehknopf 67 gemeinsam mit der Betätigungswelle 66 nach oben zieht. Der Drehknopf 67 ist formschlüssig und drehsicher auf einem unrunden Zapfen 74 der Betätigungswelle 66 mittels einer Schraube 75 befestigt.

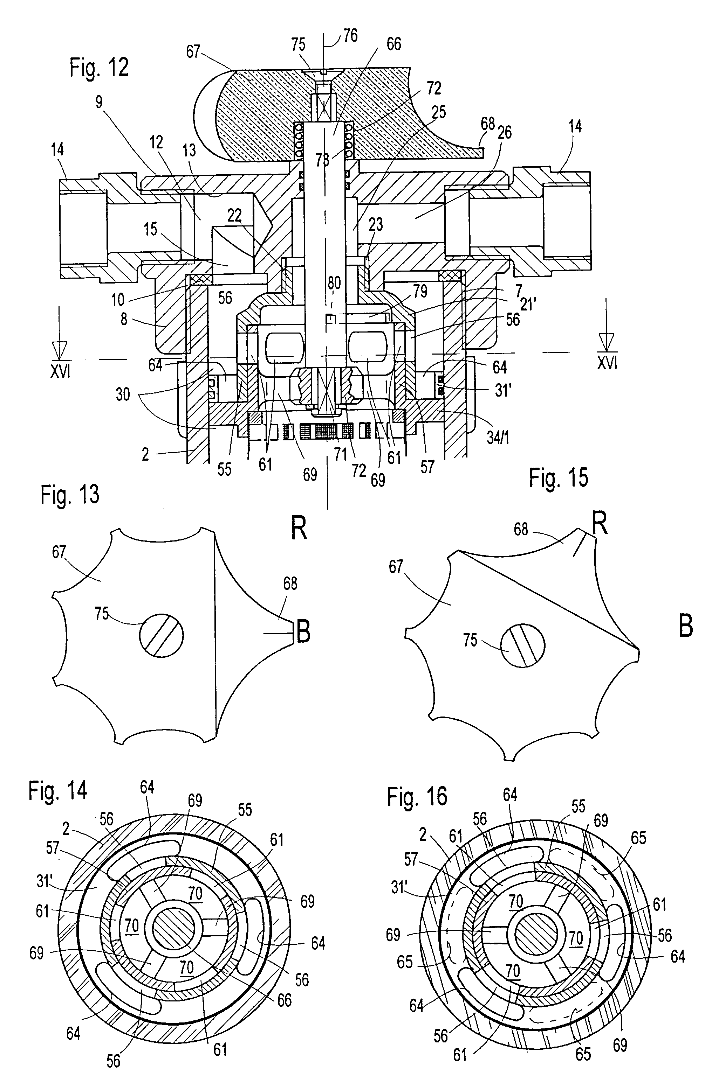

Aus den Darstellungen der Fig. 13, 14, 15 und 16 sind die beiden möglichen Drehstellungen des zweiten Ringkörpers 34/1 und des Drehknopfes 67 erkennbar. In Fig. 13 befindet sich die Zeigerspitze 68 des Drehknopfes 67 in der Position B, also im Normalbetrieb. Dabei ist aus Fig. 14 zu erkennen, daß sich die axialen Durchlaßöffnungen 64 und 65 der beiden Ringkörper 31' und 34/1 in deckungsgleicher Lage befinden, während die radialen Durchlaßöffnungen 56 der äußeren Ringwand 55 durch die innere Ringwand 57 geschlossen sind. In Fig. 15 befindet sich der Drehknopf 67 in einer Position in welcher seine Zeigerspitze 68 auf den Buchstaben R zeigt, der gegenüber dem Buchstaben B um etwa 60° versetzt ist und der der Reinigungsposition entspricht. Aus Fig. 16 ist dazu erkennbar, daß sich hierbei die radialen Durchlaßöffnungen 56 und 61 der beiden Ringwände 55 und 57 in deckungsgleicher Lage befinden, also offen sind, während die axialen Durchlaßöffnungen 64 geschlossen sind, weil sich die Durchlaßöffnungen 65 des verdrehten zweiten Ringkörpers 34/1 jeweils zwischen zwei Durchlaßöffnungen 64 des ersten Ringkörpers 31' befinden.

Im übrigen ist die Funktionsweise die gleiche wie beim Ausführungsbeispiel der Fig. 8 bis 10.

Bei diesem Ausführungsbeispiel der Fig. 11 bis 16 ergibt sich eine kürzere Bauweise bzw. mehr Platz in axialer Richtung für ein größeres, d.h. längeres Filtersieb 18, weil keine axiale Bewegung des Siebträgers 19 stattfindet. Auch die beiden Ringwände 55 und 57 können relativ kurz ausgebildet werden.

Damit die beiden Funktionsstellungen B und R des Drehknopfes 67 bzw. des zweiten Ringkörpers 34/1 sich leichter finden lassen, ist eine Drehbewegungsbegrenzung vorgesehen. Sie besteht aus einer sich über etwa 60° erstreckenden Nut 79 im Trägerring 21', in welche ein Anschlagzapfen 80 der inneren Ringwand 57 hineinragt, der jeweils am einen oder anderen Ende dieser Nut 79 anschlägt, wenn sich der Drehknopf 67 in einer der beiden in den Fig. 13 und 15 dargestellten Funktionslagen befindet.

## Patentansprüche

1. Siebfilter für flüssige oder gasförmige Medien, insbesondere für Wasserversorgungsnetze, mit einem in einem Behälter (2) zentral und mit vertikaler Achse angeordneten, von einem im wesentlichen hohlzylindrischen, gitterartig durchbrochenen Siebträger (19) getragenen, rohrförmigen und an seiner unteren Stirnseite geschlossenen Filtersieb (18), das vom strömenden Medium in radialer Richtung durchströmt wird, wobei der unterseitig mit einem verschließbaren Auslaß (3) versehene Behälter (2) oberseitig mit einem dicht aufgesetzten Kopfteil (9) versehen ist, der einen in eine Ringkammer (16) des Behälters (2) mündenden Zulauf (12) und einen mit dem Innenraum des Filtersiebes (18) in Verbindung stehenden Ablauf (26) aufweist,
**dadurch gekennzeichnet**,
daß im oberen Bereich der das Filtersieb (18) umschließenden Ringkammer (16) eine axiale Durchlaufsperre (30) angeordnet ist, die durch ein von außen bewegbares Schließorgan (33) wahlweise für eine axiale Durchströmung der Ringkammer (16) geöffnet und geschlossen werden kann.

2. Siebfilter nach Anspruch 1, dadurch gekennzeichnet, daß die Durchlaufsperre (30) einen ortsfest an der Innenfläche (17) des Behälters (2) und am Umfang des Filtersiebes (18) anliegenden ersten Ringkörper (31) mit wenigstens einer axialen Durchlaßöffnung (32) aufweist, welche durch ein relativ zum Ringkörper (31) bewegliches Schließorgan verschließbar ist.

3. Siebfilter nach Anspruch 1 oder 2, dadurch gekennzeichnet, daß der erste Ringkörper (31) der Durchlaufsperre (30) mehrere in Umfangsrichtung verteilt angeordnete Durchlaßöffnungen (32) aufweist, die mittels eines zweiten das Schließorgan (33) bildenden, axial beweglichen Ringkörpers (34) verschließbar sind, wobei der zweite Ringkörper (34) ebenfalls axiale Durchlaßöffnungen (35) aufweist, die jedoch zu den Durchlaßöffnungen (32) des ersten Ringkörpers (31) in Umfangsrichtung versetzt angeordnet sind.

4. Siebfilter nach Anspruch 3, dadurch gekennzeichnet, daß die beiden Ringkörper (31, 34) gegeneinander unverdrehbar geführt und jeweils mit einander zugekehrten planebenen Stirnflächen (36, 37) versehen sind, die aneinander anliegend die Durchlaufsperre (30) schließen.

5. Siebfilter nach einem der Ansprüche 3 oder 4, dadurch gekennzeichnet, daß der zweite, das Schließorgan (33) bildende Ringkörper (34) über mehrere in der Ringkammer (16) angeordnete Verbindungsstäbe (38) mit einem am unteren Ende des Siebträgers (19) angeordneten Verschlußteil (39) verbunden ist, welches durch einen zentralen, axialen oder drehbar beweglich im Kopfteil (9) gelagerten, den Siebträger (19) frei durchragenden Betätigungsstab (48) axial bewegbar ist.

6. Siebfilter nach Anspruch 5, dadurch gekennzeichnet, daß das Verschlußteil (39) durch ein zentrales Gewinde (46) mit dem Betätigungsstab (48) in Verbindung steht.

7. Siebfilter nach Anspruch 6, dadurch gekennzeichnet, daß das Verschlußteil (39) einen nabenartigen, axial beweglich jedoch undrehbar im Siebträger (19) geführten Ansatz (43) mit einer Gewindebohrung aufweist, in welche ein Gewindezapfen (47) des Betätigungsstabes (48) eingeschraubt ist.

8. Siebfilter nach einem der Ansprüche 1 bis 4, dadurch gekennzeichnet, daß der ortsfeste Ringkörper (31') eine am Kopfteil (9) befestigte Ringwand (55) mit wenigstens einer radialen Durchlaßöffnung (56) aufweist, in welcher eine ebenfalls mit wenigstens einer Durchlaßöffnung (61) versehene, mit dem zweiten Ringkörper (34') verbundene zweite Ringwand (57) derart axial verstellbar geführt ist, daß die Durchlaßöffnungen (56, 61) der beiden Ringwände (55, 57) sich bei geschlossener Durchlaufsperre (30) in deckungsgleicher Lage befinden und bei geöffneter Durchlaufsperre (30) geschlossen sind.

9. Siebfilter nach Anspruch 8, dadurch gekennzeichnet, daß der zweite Ringkörper (34') über mehrere Verbindungsstäbe (38) mit einem festsitzend im unteren Endabschnitt des Siebträgers (19) angeordneten Verschlußteil (59) verbunden ist, das durch einen Gewindeeingriff (47, 60) mit einem im Kopfteil (9) gelagerten, den Gewindestutzen (22), die beiden Ringwände (55, 57) und den Siebträger (19) koaxial durchragenden Betätigungsstab (48) verbunden ist.

10. Siebfilter nach Anspruch 2, dadurch gekennzeichnet, daß der ortsfeste Ringkörper (31') eine am Kopfteil (9) befestigte Ringwand (55) mit wenigstens einer radialen Durchlaßöffnung (56) aufweist, in welcher eine ebenfalls mit wenigstens einer radialen Durchlaßöffnung (61) versehene, mit dem zweiten Ringkörper (34/1) verbundene innere Ringwand (57) verdrehbar geführt ist, wobei die Durchlaßöffnung(en) (61) der zweiten Ringwand (57) und die axiale Durchlaßöffnung(en) (35) des zweiten Ringkörpers (34/1) so zueinander angeordnet sind, daß sich die radialen Durchlaßöffnungen (56, 61) der beiden Ringwände (55, 57) bei geschlossener Durchlaufsperre (30) in deckungsgleicher Lage befinden und bei geöffneter Durchlaufsperre (30) geschlossen sind.

11. Siebfilter nach einem der Ansprüche 1, 2 oder 10, dadurch gekennzeichnet, daß der zweite Ringkörper (34/1) mit der inneren Ringwand (57) über Radialstege (69), zwischen welchen axiale Durchlässe (70) bestehen, drehfest mit einer koaxial zu einer gemeinsamen Achse (76) drehbar im Kopfteil (9) gelagerten Betätigungswelle (66) verbunden ist.

12. Siebfilter nach einem der Ansprüche 8 bis 11, dadurch gekennzeichnet, daß der Siebträger (19) mit seinem oberen Ende am zweiten Ringkörper (34', 34/1) befestigt und mit diesem gemeinsam axial verstellbar oder drehbar ist.

13. Siebfilter nach einem der Ansprüche 8 bis 12, dadurch gekennzeichnet, daß die Ringwand (55) des ersten Ringkörpers (31, 31') an ihrem oberen Ende mit einem einen zentralen Gewindestutzen (22) aufweisenden Trägerring (21, 21') versehen ist und daß dieser Gewindestutzen (22) in eine zentrale Gewindebohrung (23) des Kopfteils (9) eingeschraubt ist.

14. Siebfilter nach einem der Ansprüche 2 bis 13, dadurch gekennzeichnet, daß die Durchlaßöffnungen (32, 35, 55, 61) der Ringkörper (31, 31', 34, 34', 34/1) und/oder der Ringwände (55, 57) jeweils als Langlöcher ausgebildet sind.
